# EUROPEAN PATENT APPLICATION

(11) **EP 2 586 729 A1**
(43) Date of publication of application: **01.05.2013**
(21) Application number: 10853696.2
(22) Date of filing: 10.08.2010
(51) Int. Cl.: B65G 21/22, B65G 17/10

(54) **ANCHOR CHAIN GUIDE MECHANISM FOR LADLE CONVEYANCE**

(30) Priority: 24.06.2010 JP 2010143803
(71) Applicant: Denki Kagaku Kogyo Kabushiki Kaisha, Tokyo 103-8338 (JP)
(72) Inventor: TANIMURA,Kyoichi, Itoigawa-city Niigata 949-0393 (JP); KAMAMOTO,Junpei, Itoigawa-city Niigata 949-0393 (JP); SAGAWA,Masanori, Itoigawa-city Niigata 949-0393 (JP); NANASAWA,Takashi, Itoigawa-city Niigata 949-0393 (JP)
(74) Representative: Gauer, Pierre
(86) International application number: PCT/JP2010/063558
(87) International publication number: WO 2011/161836

(57) **Abstract**

There is provided a guide mechanism of an anchor chain for conveying ladles, which can prevent an anchor chain from being twisted or sagged and can transmit motive power to the anchor chain reliably and efficiently. A linear anchor chain guide 30 is provided in a motive power transmission region where the motive power is transmitted from a conveyer chain 21 to the anchor chain 10, and the anchor chain 10 is introduced and guided to the anchor chain guide 30. The guide side parts 32 in the left and right guide half members 31, 31 constituting the anchor chain guide 30 can limit a leftward or rightward movement of the anchor chain 10. The guide upper parts 33 can limit an upward movement of the anchor chain 10. A downward stopper 13 placed at the upper end of each vertical unit ring 11 of the anchor chain 10 cannot pass downwardly through the clearance 34 set between the guide upper parts 33, 33 of the left and right guide half members31, 31, so a downward movement of the anchor chain 10 can be limited. In the motive power transmission region, a conveyer chain guide 40 is also provided for preventing the conveyer chain 21 from floating and the like.

## Description

### BACKGROUND OF THE INVENTION

The present invention relates to a guide mechanism of an anchor chain for conveying ladles, and more particular to a guide mechanism for introducing and guiding an anchor chain for conveying ladles, which receive a product (calcium carbide) from a calcium carbide producing furnace, into a motive power transmission region along a loop track.

Calcium carbide (hereinafter also referred to as merely "carbide") can be produced by heating a mixture of lime and coke to 2000 °C or more in an electric furnace. Product as molten in the furnace is sequentially received through tap outlets by a plurality of ladles. Then, those ladles are conveyed to a product processing region away from the furnace. In the product processing region, the products are unloaded from the ladles such as by using a ceiling crane, and cooling, crushing and other processes are carried out on the products. The ladles as emptied in the product processing region are conveyed to the tap outlets of the furnace to receive the products again. The weight of one ladle is approximately 1400 kg as an example. The weight of the molten carbide that is received by one ladle at one time is approximately 700 kg as an example. In a large furnace, it is needed to move approximately 100 ladles at the same time. As a way to convey ladles as very heavy loads, a method is generally used in which many bogies on which the ladles are loaded are connected to an anchor chain which is disposed along a track, and the anchor chain is moved along the track by driving apparatuses. Examples of such an anchor chain method are disclosed in JP,S51-57487,A, JP,H04-235808,A, etc. A driving apparatus transmits an output of a motive power source to a conveyer chain through a decelerator and the like, and then to the anchor chain by sequentially engaging multi-engagement parts provided on the conveyer chain at predetermined intervals with the anchor chain as the conveyer chain is revolving. Thereby, the motive power is transmitted to the anchor chain.

The weight of a unit ring constructing the anchor chain is approximately 4 kg as an example, and the weight of the entire anchor chain comes to approximately 8200 kg as an example. Moreover, as mentioned above, many ladles, bogies, etc. are connected to the anchor chain. Therefore, there is a case that a heavy-weighted anchor chain is twisted or sagged in a region where the motive power is transmitted from the driving apparatuses to the anchor chain. In this case, there is a problem that the motive power is not efficiently transmitted to the anchor chain. Further, when a positional displacement of the conveyer chain in the driving apparatus arises, a defect in the engagement with the anchor chain occurs, leading to a drop in motive power transmission efficiency to the anchor chain. At present, a circular furnace with three tap outlets at 120 degree intervals in the circumferential direction is mainly used to increase efficiency in taking out the products. However, in this case, a sharply curved portion of the track is formed to pass the track through the three tap outlets. Slacks and the like of the anchor chain at the sharply curved portion would be a cause of twists and the like of the anchor chain in the motive power transmission region.

- [Patent Document 1]: JP,S51-57487,A
- [Patent Document 2]: JP,H04-235808,A

In view of the above-mentioned problems, an object of the present invention is to provide a guide mechanism of an anchor chain for conveying ladles, which can prevent an anchor chain from being twisted or sagged and a conveyer chain from being displaced in a motive power transmission region, and can transmit motive power to the anchor chain reliably and efficiently.

### SUMMARY OF THE INVENTION

To solve the above-mentioned problems, according to the present invention, there is provided a guide mechanism of an anchor chain for conveying ladles, comprising: an anchor chain which is placed along a loop track in order to convey ladles, which receive a product from a calcium carbide producing furnace, along the track, the anchor chain arranged along being constituted by a plurality of longitudinal unit rings and a plurality of lateral unit rings alternately connected to each other; a conveyer chain which can revolve under the anchor chain to transmit motive power from a motive power source to the anchor chain to move the anchor chain along the track, the conveyer chain including a plurality of engagement parts which can be engaged with the anchor chain at predetermined intervals; a linear anchor chain guide which is provided in a motive power transmission region where the motive power is transmitted from the conveyer chain to the anchor chain, the linear anchor chain guide being along the longitudinal direction of the anchor chain; and a stopper which is fixed to an upper end of each of the longitudinal unit rings, wherein the anchor chain guide comprises a pair of left and right (the direction along the direction perpendicular to the longitudinal direction of the anchor chain and along the horizontal direction) guide half members, and each of the guide half members includes a guide side part for limiting a leftward or rightward movement of the lateral unit rings and a guide upper part for limiting an upward movement of the lateral unit ring, respectively, and a clearance, through which a portion of each of the longitudinal unit rings above the lateral unit rings is passed, is provided between the guide upper parts of the left and right guide half members, herein the stopper cannot pass through the clearance downwardly.

In the invention, the linear anchor chain guide is provided in the motive power transmission region where the motive power is transmitted from the conveyer chain to the anchor chain, and the anchor chain is introduced and guided to the anchor chain guide. The guide side parts in the left and right guide half members constituting the anchor chain guide can limit a leftward or rightward movement of the anchor chain. The guide upper parts can limit an upward movement of the anchor chain. The stopper placed at the upper end of each vertical unit ring of the anchor chain cannot pass downwardly through the clearance set between the guide upper parts of the left and right guide half members. Therefore, a downward movement of the anchor chain can be limited. The anchor chain guide is open downwardly, and through this lower opening, the engagement parts of the conveyer chain are sequentially engaged with the anchor chain to push the anchor chain in the traveling direction.

In an embodiment, the guide mechanism includes a conveyer chain guide for positioning the conveyer chain with respect to the anchor chain. The conveyer chain guide can prevent the conveyer chain from floating or being detached and fix the position in which the engagement parts of the conveyer chain are engaged with the anchor chain.

In the guide mechanism of the anchor chain for conveying ladles in accordance with the present invention, in the motive power transmission region, the anchor chain is restricted in the right and left direction and the up and down direction, twisting or sagging in the anchor chain can be prevented. Thus, the motive power can be transmitted from the conveyer chain to the anchor chain reliably and efficiently. Also, a positional displacement of the conveyer chain can be prevented. Hence, the transmission of the motive power from the conveyer chain to the anchor chain becomes more reliable.

### BRIEF DESCRIPTION OF THE DRAWINGS

Fig. 1 is an explanatory plane view schematically showing an track etc. for conveying ladles between a calcium carbide producing furnace and a product processing region.
Fig. 2 is an explanatory side view schematically showing a state where motive power is transmitted from a conveyer chain to an anchor chain.
Fig. 3 is a partial side view of the anchor chain.
Fig. 4 is a partial top view of the anchor chain.
Fig. 5 is an explanatory top view schematically showing a state where a hook of the conveyer chain is engaged with the anchor chain, with an anchor chain guide omitted.
Fig. 6 is an explanatory sectional view of the anchor chain guide.
Fig. 7 is an explanatory side view similar to Fig. 2, schematically showing the conveyer chain and a conveyer chain guide.
Fig. 8 is an explanatory view of the conveyer chain guide.
Fig. 9 is an explanation cutaway view showing a hook plate as enlarged to which a hook is fixed.

### DETAILED DESCRIPTION OF THE INVENTION

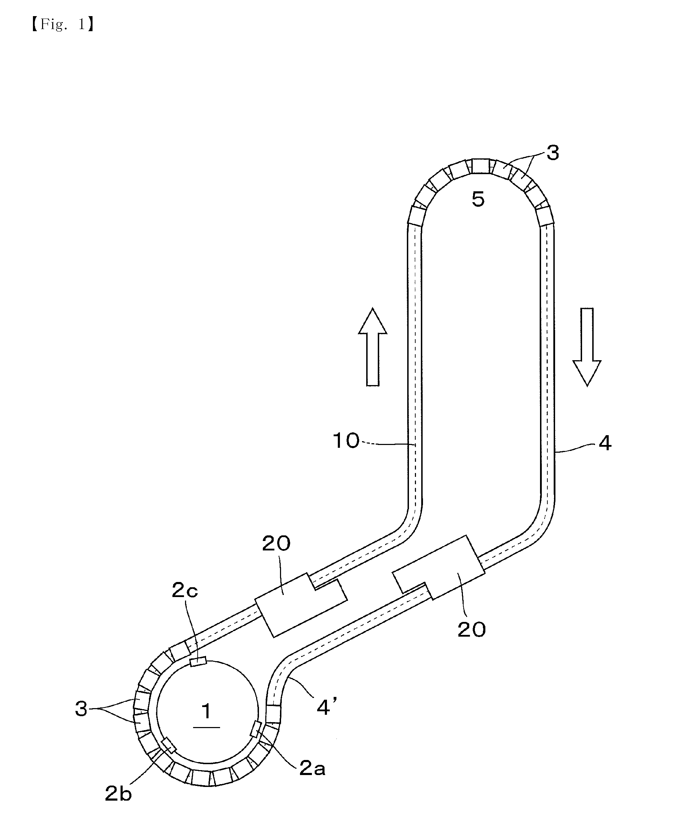

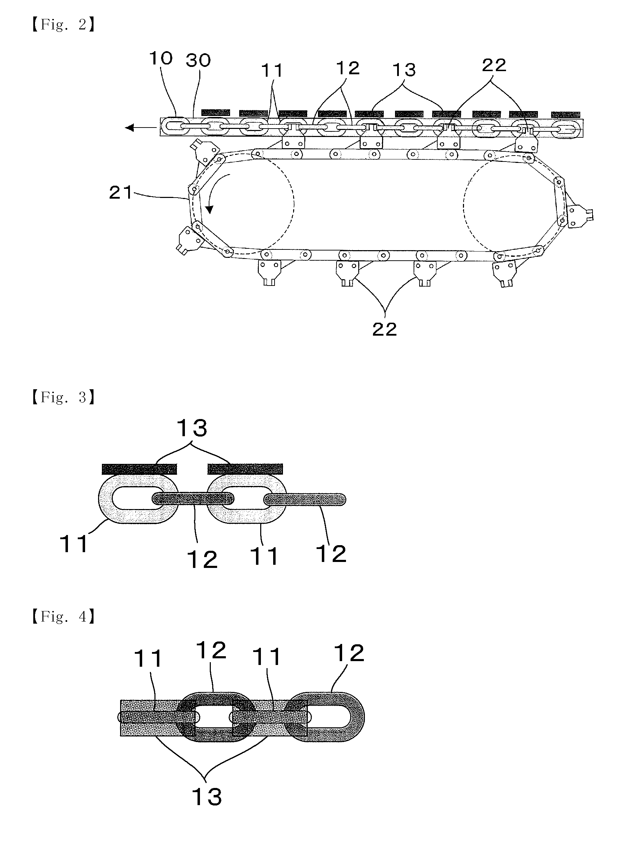

Hereinafter, a preferable embodiment of a guide mechanism of an anchor chain for conveying ladles in accordance with the present invention will be described below with reference to the drawings. However, the invention is not limited thereto. Fig. 1 is an explanatory plane view schematically showing an track 4 etc. for conveying ladles 3 which receive molten products from tap outlets 2a, 2b and 2c of a calcium carbide producing furnace 1. The track 4 is laid in a loop form between the furnace 1 and a product processing region 5 away from the furnace 1. The track 4 includes a sharply curved portion 4' to pass the three tap outlets 2a, 2b and 2c which are provided at 120 degree intervals of the furnace 1 having a circular horizontal section. A dashed line 10 in Fig. 1 indicates an anchor chain 10 arranged along the center of the track 4. Although not show, many guide rollers for smoothly moving the anchor chain 10 along the track 4 are provided in the track 4. A lot of bogies (not shown) which can move on the track 4 are connected to the anchor chain 10 in an almost entire area of the chain. The bogies are loaded with the ladles 3 in a one-to-one manner. Although, in Fig. 1, the ladles 3 are represented only around the furnace 1 and in the product processing region 5 for convenience, the ladles 3 exist in an almost entire area of the anchor chain 10 as placed on all of the bogies respectively. The anchor chain 10 receives motive power from two anchor chain driving apparatuses 20 as an example installed for the track 4 to move on the track 4 in the clockwise direction. Thereby, the ladles 3 loaded on the bogies are moved in the traveling direction (see the arrows). The anchor chain driving apparatus 20 includes a conveyer chain 21 (see Fig. 2 etc.) for transmitting the motive power from a motive power source (motor) (not shown) to the anchor chain 10. Although not shown, an output of the motive power source is transmitted to the conveyer chain 21 through an electromagnetic clutch, a fluid coupling, a decelerator, a one-way clutch, a driving roller chain and the like,.

Fig. 2 is an explanatory side view schematically showing a motive power transmission region in which the motive power is transmitted from the conveyer chain 21 of the anchor chain driving apparatus 20 to the anchor chain 10. In Fig. 2, a conveyer chain guide 40 as will be described later is omitted for convenience. Figs. 3 and 4 are a partial side view and a partial top view of the anchor chain 10, respectively. The anchor chain 10 is configured such that many vertical unit rings (hereafter also referred to as merely "vertical rings") 11 made of typical structural rolled steel (SS) and many horizontal unit rings (hereinafter also referred to as merely "horizontal rings") 12 are alternately connected to each other. A rectangular plate-like downward stopper 13 made of SS is fixed to a top of each longitudinal ring 11 by welding.

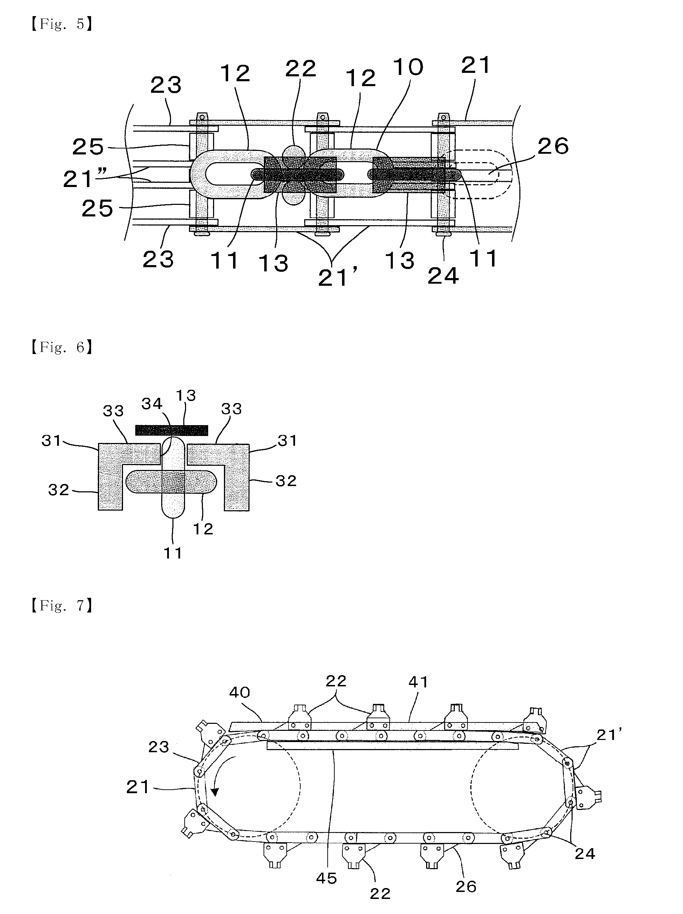

The conveyer chain 21 is arranged just under the anchor chain 10 in the motive power transmission region, in order to transmit the motive power to the anchor chain 10. In the conveyer chain 21, as also shown in Fig. 5, a plurality of hooks 22 as engagement parts are provided at predetermined intervals in the longitudinal direction of the conveyer chain 21. Each of the hooks 22 can be inserted into a gap between adjacent two lateral rings 12 in the anchor chain 10. The hook 22 is branched into two tip parts to be inserted between adjacent lateral rings 12 so as to sandwich the longitudinal ring 11 between them. When the conveyer chain 21 is revolved (in the counterclockwise direction in Fig. 2), the hooks 22 sequentially engage the anchor chain 10 to push the anchor chain 10. Thereby, the chain 10 is moved in the traveling direction. The conveyer chain 21 will be described later in detail.

The reference numeral 30 in Fig. 2 indicates an anchor chain guide, which is provided in the motive power transmission region. Fig. 6 is an explanatory section view of the anchor chain guide 30. The anchor chain guide 30 is constituted by a pair of left and right guide half members 31, 31 made of the SS, which are supported by respective supportive components (not shown) and are linearly elongated in the traveling direction. The guide half members 31, 31 each have L-shaped section and are open downwardly. Through this lower opening in the guide 30, the above-mentioned engagement between the engagement parts 22 of the conveyer chain 21 and the anchor chain 10 is carried out. Each of those guide half members 31, 31 includes a guide side part 32 for limiting a leftward or rightward movement of the lateral rings 12 and a guide upper part 33 for limiting an upward movement of the lateral rings 12. Between the guide upper parts 33, 33 of the left and right guide half members 31, 31, a clearance 34 is set through which a portion of each of the longitudinal rings 11 above the lateral rings 12 can pass. The downward stopper 13 fixed to the upper end of the longitudinal ring 11 cannot pass through the clearance 34 downwardly. The anchor chain 10 is pulled into the motive power transmission region while being guided by the guide 30. At this time, the lateral ring 12 is passed to between the guide side parts 32, 32 of the guide half members 31, 31 and below the guide upper parts 33, 33, and an upper part of the longitudinal ring 11 is passed through the clearance 34. Moreover, the downward stopper 13 of the longitudinal ring 11 is passed to above the guide upper parts 33, 33. Thereby, the anchor chain 10 is restricted in the right and left direction and the up and down direction by the anchor chain guide 30, and its twisting or sagging can be prevented. Therefore, the transmission of the motive power from the conveyer chain 21 to the anchor chain 10 can be done surly and efficiently.

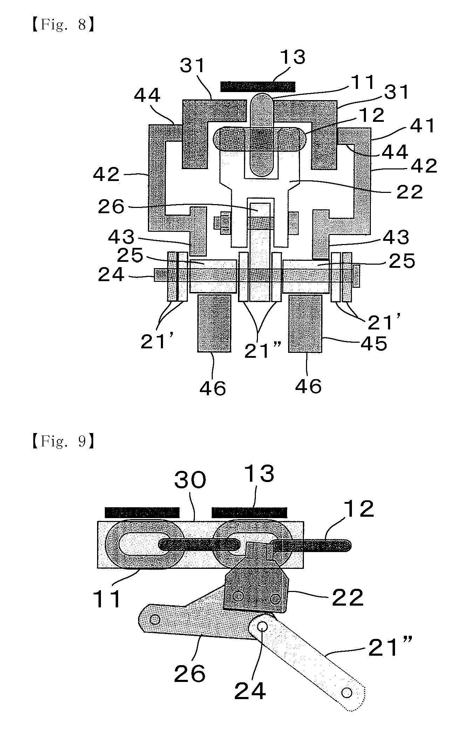

Fig. 7 is a side view of the conveyer chain 21 similar to Fig. 2, but it shows the conveyer chain guide 40 as omitted in Fig. 2. The anchor chain 10 and the anchor chain guide 30 are omitted in Fig. 7. Fig. 8 is an explanatory section view of the conveyer chain guide 40. In Fig. 8, the anchor chain 10 and the guide 30 are also shown. Also referring to Fig. 5, the conveyer chain 21 comprises left and right link chains 23, 23, each of which is constructed by a plurality of unit links 21' that are connected to each other in the longitudinal direction, a plurality of lateral shafts 24 which connect the left and right link chains 23, 23 while linking longitudinally adjacent unit links 21' , and two left and right rollers 25, 25 which are placed on the respective lateral shafts 24. Between the left and right rollers 25, 25, a block plate 26 for connecting the hooks 22 is installed via the lateral shaft 24 at predetermined intervals in the longitudinal direction of the conveyer chain 21. The block plate 26 is provided every other unit link 21' . Thus, a region (unit region) between longitudinally adjacent two lateral shafts 24 comes to alternately the unit regions where the block plate 26 exists and the unit regions where the block plate 26 does not exist. In the unit regions without the block plate 26, the left and right inner unit links 21" are fixed between the left and right rollers 25, 25 and on the two lateral shafts 24 defining the unit region between them. Both longitudinal ends of the inner unit link 21" in one unit region are fixed on the lateral shafts 24 and overlapped with both longitudinal ends of the block plate 26 in another unit region adjacent to the one unit region as shown in Fig. 9. A conveyer chain 21-side end of the hook 22 is fixed to the block plate 26 using bolts and nuts.

The conveyer chain guide 40 as provided in the motive power transmission region comprises an upper guide 41 and a lower guide 45, which are supported by supportive members (not shown), elongated and made of SS. The upper guide 41 is constituted by left and right upper guide half members 42, 42, each of which is approximately U-shaped in section. Each of the upper guide half members 42, 42 includes a lower end part 43 which downwardly comes close to or in contact with the left or right roller 25 in the conveyer chain 21, and an upper end part 44 which comes close to or in contact with the outer side of the left or right guide half member 31 in the anchor chain guide 30. The lower end parts 43 are also close to the (inner) unit links 21' of the left and right link chains 23, 23, the vertical length of each unit links 21' being greater than the diameter of each roller 25. Further, the lower end of the lower end part 43 is located slightly lower than the upper end of the unit link 21' . The lower guide 45 is constituted by left and right lower guide half members 46, 46, each of which is rectangular shaped in section. The lower guide half members 46, 46 are provided to downwardly come close to or in contact with the left and right rollers 25, 25. The lower end parts 43 of the respective upper guide half members 42 and the respective lower guide half members 46 surely prevent the conveyer chain 21 from moving up and down such as floating of the chain or the like. Also, as mentioned above, the lower end parts 43 of the respective upper guide half members 42 are close to the unit links 21' , and the lower ends of the lower end parts 43 are located lower than the upper ends of the unit links 21' . Thus, left and right movements of the conveyer chain 21 can be also prevented.

### DESCRIPTION OF REFERENCE NUMBERS

| | |
|---|---|
| 1 | Calcium Carbide Manufacturing Furnace |
| 2a, 2b, 2c | Tap Outlet |
| 3 | Ladle |
| 4 | Track |
| 5 | Product Processing Region |
| 10 | Anchor Chain |
| 11 | Vertical Unit Ring |
| 12 | Horizontal Unit Ring |
| 13 | Downward stopper |
| 20 | Anchor Chain Driving Apparatus |
| 21 | Conveyer Chain |
| 22 | Hook (Engagement Part) |
| 30 | Anchor Chain Guide |
| 31 | Guide Half Member |
| 32 | Guide Side Part |
| 33 | Guide Upper Part |
| 40 | Conveyer Chain Guide |
| 41 | Upper Guide |
| 45 | Lower Guide |

## Claims

1. A guide mechanism of an anchor chain for conveying ladles, comprising:
an anchor chain which is placed along a loop track in order to convey ladles, which receive a product from a calcium carbide producing furnace, along the track, the anchor chain arranged along being constituted by a plurality of longitudinal unit rings and a plurality of lateral unit rings alternately connected to each other;
a conveyer chain which can revolve under the anchor chain to transmit motive power from a motive power source to the anchor chain to move the anchor chain along the track, the conveyer chain including a plurality of engagement parts which can be engaged with the anchor chain at predetermined intervals;
a linear anchor chain guide which is provided in a motive power transmission region where the motive power is transmitted from the conveyer chain to the anchor chain, the linear anchor chain guide being along the longitudinal direction of the anchor chain; and
a stopper which is fixed to an upper end of each of the longitudinal unit rings,
wherein the anchor chain guide comprises a pair of left and right guide half members, and each of the guide half members includes a guide side part for limiting a leftward or rightward movement of the lateral unit rings and a guide upper part for limiting an upward movement of the lateral unit ring, respectively, and a clearance, through which a portion of each of the longitudinal unit rings above the lateral unit rings is passed, is provided between the guide upper parts of the left and right guide half members,
wherein the stopper cannot pass through the clearance downwardly.

2. The guide mechanism according to claim 1, which includes a conveyer chain guide for positioning the conveyer chain with respect to the anchor chain.
